# EUROPÄISCHE PATENTSCHRIFT

(11) **EP 2 591 935 B1**
(45) Veröffentlichungstag und Bekanntmachung des Hinweises auf die Patenterteilung: **19.03.2014**
(21) Anmeldenummer: 12186752.7
(22) Anmeldetag: 01.10.2012
(51) Int. Cl.: B60K 17/346

(54) **Verteilergetriebe**
Transfer case
Boîte de transfert

(30) Priorität: 10.11.2011 DE 102011086061
(43) Veröffentlichungstag der Anmeldung: 15.05.2013
(73) Patentinhaber: ZF Friedrichshafen AG, 88038 Friedrichshafen (DE)
(72) Erfinder: Reitinger, Franz, 4091 Vichtenstein (AT)

(56) Entgegenhaltungen:
- EP-A2- 1 129 883
- EP-A2- 1 238 847
- WO-A1-99/01310

## Beschreibung

Die vorliegende Erfindung betrifft ein Verteilergetriebe für ein mit mehr als zwei angetriebenen Antriebsräder, beispielsweise ein vierradgetriebenes Kraftfahrzeug. Solche Verteilergetriebe sind zur Realisierung eines Geländegangs neben einem Straßengang bekannt.

Ein solches Verteilergetriebe ist aus der WO 99/01310 bekannt. Das aus dieser Druckschrift bekannte Verteilergetriebe weist ein Gehäuse, eine Eingangswelle und ein mit dieser trieblich verbindbares Planetengetriebeteil auf. Das Planetengetriebeteil besteht aus einem Sonnenrad, einem Planetenträger, mehreren Planetenrädern und einem als Innenverzahnung des Gehäuses und mit diesem fest verbundenen Hohlrad. Die Eingangswelle ist durch eine Kupplung wahlweise mit dem Sonnenrad oder dem Planetenträger kuppelbar. Von dem Planetenträger ist ein Kegelraddifferential angetrieben, welches über eine erste, konzentrisch zu der Eingangswelle angeordneten Abtriebswelle die Hinterachse des Kraftfahrzeuges und über eine weitere, zu der Eingangswelle versetzte Abtriebswelle die Vorderachse antreibt.

Im Straßengang wird die Eingangswelle mit dem Planetenträger gekuppelt. Das Sonnenrad steht allein mit den Planetenrädern in Zahneingriff. Das Drehmoment der Eingangswelle wird unmittelbar über den Planetenträger auf das Kegelraddifferential übertragen. Die Antriebsdrehzahl entspricht somit der Abtriebsdrehzahl. Es ergibt sich ein Übersetzungsverhältnis i = 1.

Im Geländegang wird die Eingangswelle von dem Planetenträger entkuppelt und mit dem Sonnenrad gekuppelt. Durch das Planetengetriebeteil ist die Antriebsdrehzahl größer als die Abtriebsdrehzahl. In dieser Einstellung ist allerdings das Übersetzungsverhältnis immer größer als 2. Denn für das Übersetzungsverhältnis in einem Planetengetriebe mit einem festen Hohlrad, einem Sonnenrad als Antrieb und einem Planetenträger als Abtrieb gilt i = 1 - Z_{H}/Z_{S}. Dabei ist Z_{H} die Anzahl der Zähne des Hohlrades, die bei diesem einfachen Planetenradsatz mit einer Innenverzahnung negativ definiert ist. Z_{S} ist die Anzahl der Zähne des Sonnenrades. Da die Größen der Zähne des Sonnenrads und des Hohlrads identisch sind, und der Innenumfang des Hohlrades ist größer als der Außenumfang des Sonnenrades ist, ergibt sich stets Z_{H}/Z_{S} < -1. Das Übersetzungsverhältnis i ist entsprechend immer größer als 2. Ein Übersetzungsverhältnis zwischen 1 und 2 ist aufbaubedingt bei dem vorbekannten Verteilergetriebe nicht möglich.

Die EP 1 129 883 A2 offenbart ein Verteilergetriebe gemäß dem Oberbegriff von Anspruch 1.

Der vorliegenden Erfindung liegt das Problem zugrunde, ein Verteilergetriebe der eingangs genannten Art anzugeben, dessen Geländegang-Übersetzung den praktischen Anforderungen besser gerecht wird.

Zur Lösung dieses Problems wird mit der vorliegenden Erfindung ein Verteilergetriebe nach Anspruch 1 angegeben. Die Eingangswelle ist mit dem drehbar in dem Gehäuse gelagerten, ersten Hohlrad trieblich verbunden, vorzugsweise fest verbunden. Regelmäßig sind die Eingangswelle, das erste Sonnenrad und das erste Hohlrad konzentrisch zueinander angeordnet. Die Eingangswelle durchdringt das erste Hohlrad und ist durch ein Verbindungselement, vorzugsweise mehrere radiale Verbindungsstege mit diesem verbunden. Die Verbindungsstege sind vorzugsweise auf der der Eingangswelle abgewandten Seite, d. h. der Ausgangsseite vorgesehen. Das erste Sonnenrad ist vorzugsweise über eine Hohlwelle mit einem Kupplungsrad drehfest verbunden, welches von der Eingangswelle durchsetzt ist. Alternativ können das Verbindungselement bzw. die Verbindungsstege auf der der Eingangswelle zugewandten Seite, d. h. der Eingangsseite, angeordnet werden. In diesem Fall ist das erste Sonnenrad regelmäßig von einer, vorzugsweise beiden Abtriebswellen durchsetzt. Somit ist das erste Hohlrad bzw. das erste Planetengetriebeteil von der Eingangswelle antreibbar. Das erste Sonnenrad ist zur Darstellung eines Geländegangs durch die erste Kupplung mit dem Gehäuse drehfest kuppelbar. Die erste Kupplung ist in der Regel eine schaltbare Kupplung, die wahlweise Drehmomente zwischen dem ersten Sonnenrad und dem Gehäuse überträgt oder das erste Sonnenrad von dem Gehäuse entkuppelt. Die erste Kupplung kann kraftschlüssig oder formschlüssig sowie manuell oder automatisch betätigbar sein.

Im Geländegang, in dem das erste Sonnenrad drehfest mit dem Gehäuse gekuppelt ist, erfolgt der Antrieb über das von der Eingangswelle angetriebene erste Hohlrad. Der Abtrieb zu dem zweiten Planetengetriebeteil erfolgt über den Planetenträger. Dieser zweite Planetengetriebeteil hat üblicherweise ein Übersetzungsverhältnis von 1. Das gemeinsame Übersetzungsverhältnis des Verteilergetriebes in dem Geländegang ist somit lediglich von dem Übersetzungsverhältnis des ersten Planetengetriebeteils abhängig. Es ergibt sich ein gemeinsames Übersetzungsverhältnis von i = 1 - Z_{S}/Z_{H}. Z_{S}/Z_{H} liegt in der Regel zwischen -1 und 0, so dass ein Übersetzungsverhältnis größer als 1 und kleiner als 2 bei einer Kraftgleichheit der beiden Abtriebswellen ermöglicht wird.

Gemäß einer bevorzugten Weiterbildung ist das erste Sonnenrad durch die erste Kupplung mit dem Planetenträger zur Darstellung eines Straßengangs drehfest kuppelbar. Dementsprechend ist das erste Sonnenrad von dem Gehäuse in der Regel vollständig entkuppelt und drehbar in dem Gehäuse gelagert. Im Straßengang drehen das erste Sonnenrad und der Planetenträger nicht relativ zueinander. Somit ist die Antriebsdrehzahl des ersten Planetengetriebeteils, d. h. die Drehzahl des ersten Hohlrades mit der Abtriebsdrehzahl des ersten Planetengetriebeteils, d. h. die Drehzahl des Planetenträgers identisch. Dadurch wird ein Straßengang mit einem Übersetzungsverhältnis i = 1 bei einer Kraftgleichheit der beiden Abtriebswellen ermöglicht.

Mit der bevorzugten Weiterbildung nach Anspruch 3 wird die erste Kupplung zur Darstellung eines Neutralgangs weitergebildet. Die erste Kupplung ist danach in der Lage, das Sonnenrad von dem Gehäuse und dem Planetenträger zu entkuppeln, so dass das Sonnenrad frei drehen kann. Vorzugsweise ist das Sonnenrad über eine verdrehfest daran angeordnete Welle, insbesondere eine Hohlwelle drehbar gelagert. Diese Hohlwelle reicht bis zu der ersten Kupplung, um dort durch Ein- bzw. Ausrücken dieser ersten Kupplung das Sonnenrad wahlweise von dem Gehäuse zu trennen. Auch der Planetenträger ist durch eine Welle, insbesondere eine Hohlwelle axial verlängert, welche bis zu der ersten Kupplung reicht. Die erste Kupplung ist dabei so ausgestaltet, dass das Sonnenrad von dem Gehäuse oder das Sonnenrad von dem Planetenträger oder das Sonnenrad von dem Gehäuse und dem Planetenträger entkuppelt bzw. mit einem von diesen gekuppelt ist. In dem Neutralgang ist das Sonnenrad durch die erste Kupplung von dem Gehäuse und dem Planetenträger entkuppelt, so dass das Sonnenrad frei drehen kann. Während das Hohlrad und das Sonnenrad in entgegengesetzten Richtungen drehen, steht der Planetenträger aufgrund der nachgeschalteten Last still. Das zweite Planetengetriebeteil sowie die Abtriebswellen sind folglich von der Eingangswelle entkuppelt. Ein Neutralgang ist durch Betätigen der ersten Kupplung darstellbar.

Zur Darstellung eines Straßengangs wird gemäß einer bevorzugten Weiterbildung nach Anspruch 4 vorgeschlagen, das erste Sonnenrad durch die erste Kupplung mit dem ersten Hohlrad drehfest kuppelbar vorzusehen. Dementsprechend ist das erste Sonnenrad von dem Gehäuse in der Regel vollständig entkuppelt und drehbar in dem Gehäuse gelagert. In diesem gekuppelten Zustand drehen das erste Sonnenrad und das erste Hohlrad nicht relativ zueinander. Der Planetenträger dreht mit der gleichen Drehzahl mit. Somit ist die Antriebsdrehzahl mit der Abtriebsdrehzahl des ersten Planetengetriebeteils identisch. Dadurch wird ein Straßengang mit einem Übersetzungsverhältnis i = 1 bei einer Kraftgleichheit der Abtriebswellen ermöglicht.

Der Vorteil dieser Weiterbildung liegt in der Verteilung der zu übertragenden Kraft und einer höheren Lebensdauer. Das zu übertragende Drehmoment der Eingangswelle wird durch die erste Kupplung auf das erste Sonnenrad und das erste Hohlrad verteilt. Somit werden Kräfte sowohl über das erste Hohlrad als auch über das erste Sonnenrad auf das erste Planetenrad bzw. den Planetenträger übertragen. Die über den einzelnen Zähnen des ersten Planetengetriebeteils zu übertragende Kräfte sind dementsprechend reduziert. Des Weiteren dreht das gesamte erste Planetengetriebeteil als eine Einheit mit der Eingangswelle. Das heißt, die Drehgeschwindigkeit des ersten Sonnenrades, des ersten Hohlrades, des Planetenträgers und des ersten Planetenrads um die gemeinsame Drehachse sind identisch. Die Zahnräder des ersten Planetengetriebeteils drehen sich nicht relativ zueinander. Folglich führt diese Darstellung des Straßengangs zu einer erheblichen Minderung der Reibung und des Verschleißes.

Gemäß einer bevorzugten Weiterbildung nach Anspruch 5 ist die erste Kupplung zur Darstellung eines Neutralgangs weitergebildet. Die erste Kupplung ist danach in der Lage, das erste Sonnenrad von dem Gehäuse und dem ersten Hohlrad zu entkuppeln. Bei einer gleichzeitigen Entkupplung kann sich das erste Sonnenrad frei drehen. Auch bei dieser Weiterbildung ist das erste Sonnenrad über eine Welle, regelmäßig eine Hohlwelle drehbar in dem Gehäuse gelagert. Eine entsprechende Welle lagert üblicherweise auch das Hohlrad. Diese beiden Wellen enden üblicherweise in axialer Richtung auf Höhe der ersten Kupplung, die zur Darstellung des Neutralganges das erste Sonnenrad von dem Gehäuse und dem ersten Hohlrad entkuppelt. In diesem Neutralgang kann das erste Sonnenrad frei drehen, wohingegen der Planetenträger aufgrund der nachgeschalteten Last still steht und das erste Hohlrad durch Vermittlung des ersten Planetenrads das erste Sonnenrad in Drehbewegung versetzt, ohne das ein Kraftfluss an die Abtriebswelle weitergeleitet wird. Das zweite Planetengetriebeteil sowie die Abtriebswellen sind folglich von der Eingangswelle entkuppelt. Ein Neutralgang ist durch die Weiterbildung der ersten Kupplung ermöglicht.

Gemäß einer weiteren bevorzugten Ausgestaltung nach Anspruch 6 ist das zweite Planetengetriebeteil als ein zweites, konzentrisch zu dem ersten Planetengetriebeteil vorgesehenes Planetengetriebeteil mit einem zweiten Sonnenrad und mindestens einem zweiten, auf dem Planetenträger gelagerten Planetenrad ausgebildet. Durch den gemeinsamen Planetenträger wird eine besonders platzsparende Anordnung ermöglicht. Während die erste Abtriebswelle von dem zweiten Hohlrad antreibbar ist, wird die zweite Abtriebswelle von dem zweiten Sonnenrad angetrieben. Der Planetenträger trägt üblicherweise sowohl die ersten wie auch die zweiten Planetenräder. Mit Blick auf die Verbindung mit der ersten oder zweiten Kupplung ist der Planetenträger beispielsweise über eine sich zwischen den beiden Planetengetriebeteilen angeordnete Ringscheibe an eine Hohlwelle angeschlossen, die bis zu der entsprechenden Kupplung reicht. Alternativ kann an einem den Hohlrädern gegenüberliegenden Ende eine entsprechende Ringscheibe vorgesehen sein, die entweder mit einer Hohlwelle verbunden ist oder aber unmittelbar Elemente der entsprechenden Kupplung trägt.

Vorzugsweise ist die erste Abtriebswelle konzentrisch zu dem ersten und dem zweiten Planetengetriebeteil angeordnet. Die zweite Abtriebswelle ist vorzugsweise eine konzentrisch zu diesen angeordnete Hohlwelle, die an einem axialen Ende mit dem zweiten Sonnenrad und an einem anderen axialen Ende mit einem ersten Transmissionsrad drehfest verbunden ist, das in beliebiger Weise, z. B. über ein Zahnrad oder ein Zugband, ein zweites Transmissionsrad vorzugsweise eine weitere, versetzt zu der Eingangswelle und der ersten Abtriebswelle angeordneten Welle antreibt. Diese Welle treibt die Vorder- oder die Hinterachse des Kraftfahrzeuges an.

Mit Blick auf einen größeren Abstand in axialer Richtung zwischen den in der Kraftflussrichtung nachgelagerten Enden der ersten und der zweiten Abtriebswellen ist das erste Planetengetriebeteil gemäß einer bevorzugten Weiterbildung nach Anspruch 7 in dem zweiten Hohlrad des zweiten Planetengetriebeteils aufgenommen. Das zweite Planetengetriebeteil nimmt somit das erste Planetengetriebeteil in sich auf, so dass die Kraftübertragung zwischen dem zweiten Planetengetriebeteil und den Abtriebswellen auf einfache Weise erfolgen kann. Dabei wird die erste Abtriebswelle vorzugsweise an einem axialen Ende des zweiten Planetengetriebeteils mit dem zweiten Hohlrad und die zweite Abtriebswelle an einem anderen axialen Ende mit dem zweiten Sonnenrad trieblich verbunden. Die Verbindungswellen zwischen dem Verteilergetriebe und der damit angetriebenen Fahrzeugsachse können entsprechend kürzer ausgelegt werden. Dies ermöglicht eine kompaktere, insbesondere axial kürzere Ausgestaltung des Fahrzeugs und reduziert die Schwingungen der Verbindungswellen.

Mit Blick auf ein sperrbares zweites Planetengetriebeteil ist das zweite Sonnenrad gemäß einer bevorzugten Weiterbildung nach Anspruch 8 durch eine zweite Kupplung mit dem Planetenträger kuppelbar. Vorzugsweise soll die zweite Kupplung unter schweren Bedingungen manuell zugeschaltet werden und die Ausgleichsfunktion des zweiten Planetengetriebesteils außer Funktion setzen, d. h. blockieren. Somit wird eine "100 %-Sperre" ermöglicht. Das zweite Planetengetriebeteil kann als ein Torsen-Ausgleichsgetriebe mit selbstsperrender Wirkung ausgebildet werden.

Bei einer alternativen bevorzugten Ausgestaltung des zweiten Planetengetriebeteils nach Anspruch 9 ist das zweite Sonnenrad durch eine zweite Kupplung mit dem zweiten Hohlrad kuppelbar. Vorzugsweise ist die zweite Kupplung zwischen dem in Kraftflussrichtung nachgelagerten Enden der ersten und der zweiten Abtriebswellen angeordnet. Ferner bevorzugt ist die zweite Kupplung dem zweiten Planetengetriebeteil in der Kraftflussrichtung nachgelagert. Somit kann die Ausgleichskraft, welche zu den unterschiedlichen Drehzahlen der Abtriebswellen zurückzuführen ist, von der zweiten Kupplung abgefangen werden, bevor die Ausgleichskraft rückwärts in der der Kraftflussrichtung entgegengesetzten Richtung zu dem zweiten Planetengetriebeteil weitergeleitet wird. Die Zahnräder des zweiten Planetengetriebeteil ssind folglich nicht durch die Ausgleichskraft beansprucht. Dadurch wird die Lebensdauer des Differentialgetriebes erhöht.

Bei einer bevorzugten Weiterbildung dieser alternativen Ausgestaltung nach Anspruch 10 ist das zweite Planetengetriebeteil in dem ersten Hohlrad aufgenommen. Da die

Ausgleichskraft durch die zweite Kupplung abgefangen wird, ist das zweite Planetengetriebeteil nicht durch die Ausgleichskraft beansprucht. Entsprechend kann das zweite Planetengetriebeteil kleiner ausgelegt werden. Durch die Aufnahme des zweiten Planetengetriebeteils in das erste Hohlrad wird eine kompakte, raumsparende Bauweise ermöglicht.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: ein vereinfachtes Getriebeschema eines ersten Ausführungsbeispiels;
- Fig. 2: ein vereinfachtes Getriebeschema eines zweiten Ausführungsbeispiels;
- und Fig. 3: ein vereinfachtes Getriebeschema eines dritten Ausführungsbeispiels

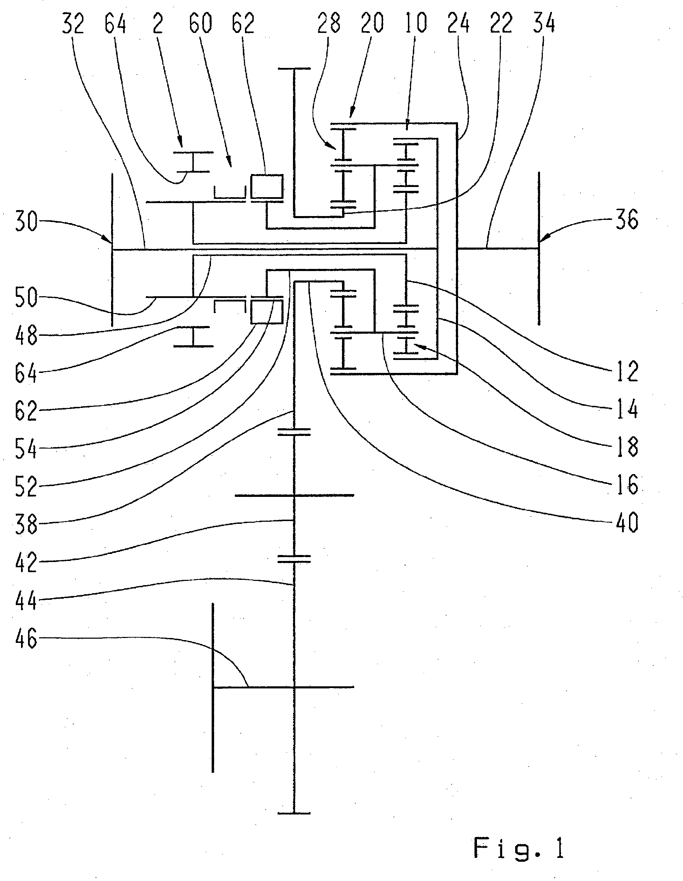

Nachfolgend werden zunächst die bei den drei Ausführungsbeispielen gemeinschaftlich verwirklichten Bauelemente der jeweiligen Getriebe vorgestellt. Diese Beschreibung erfolgt zunächst unter Bezugnahme auf Figur 1.

In einem nur schematisch wiedergegebenen Gehäuse 2 befindet sich ein mit Bezugszeichen 10 gekennzeichnetes erstes Planetengetriebeteil mit einem ersten Sonnenrad 12, einem ersten Hohlrad 14 sowie einem Planetenträger 16, über den erste Planetenräder 18 drehbar lagert. Konzentrisch hierzu ist ein zweites Planetengetriebeteil 20 mit einem zweiten Sonnenrad 22, einem zweiten Hohlrad 24 und zweiten Planetenrädern 28 vorgesehen, die über den Planetenträger 16 gelagert sind.

Mit Bezugszeichen 30 ist ein eingangsseitiger Flansch gekennzeichnet, der an die Abtriebseite eines Fahrzeugantriebs anflanschbar und mit einer mit Bezugszeichen 32 gekennzeichneten Eingangswelle fest verbunden ist. Auf der Abtriebsseite des Gehäuses und koaxial zu der Eingangswelle 32 ist eine erste und mit Bezugszeichen 34 gekennzeichnete Abtriebswelle vorgesehen, die mit einem ausgangsseitigen Flansch 36 verbunden ist. Konzentrisch zu diesen Wellen 32, 34 befindet sich ferner ein mit Bezugszeichen 38 gekennzeichnetes erstes Transmissionsrad, welches verdrehfest an einer als Hohlwelle ausgebildeten zweiten Abtriebswelle 40 angeordnet ist und mit einem Zwischenrad 42 kämmt, welches wiederum in Eingriff mit einem zweiten Transmissionsrad 44 ist, das verdrehfest mit einer versetzten Abtriebswelle 46 verbunden ist.

Diese Elemente sind bei allen drei gezeigten Ausführungsbeispielen in gleicher Weise verwirklicht.

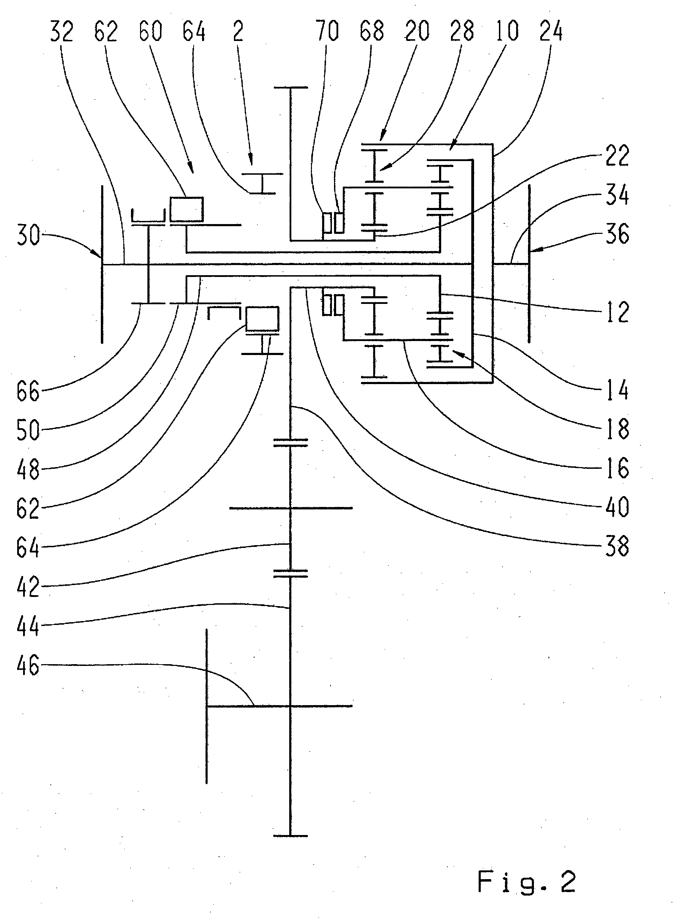

Bei dem in den Figuren 1 und 2 gezeigten Ausführungsbeispielen ist das erste Planetengetriebeteil 10 von dem zweiten Hohlrad 24 des zweiten Planetengetriebeteils 20 umgeben. Mit anderen Worten befindet sich das erste Planetengetriebeteil 10 in axialer Richtung innerhalb des zweiten Planetengetriebeteils 20, wobei die zweiten Planetenräder 28 und das zweite Sonnenrad 22 das erste Planetengetriebeteil 10 stirnseitig einschließen.

Die Eingangswelle 32 ist als Vollwelle ausgebildet und trägt das erste Hohlrad 14 als Festrad an seinem ausgangsseitigen axialen Ende. Konzentrisch zu der Eingangswelle 32 ist eine mit Bezugszeichen 48 gekennzeichnete Hohlwelle vorgesehen, die an ihrem einen Ende das erste Sonnenrad 12 als Festrad trägt und deren anderes Ende mit einem Kupplungsrad 50 verbunden ist. Eine weitere konzentrisch hierzu vorgesehene und mit Bezugszeichen 52 gekennzeichnete Hohlwelle trägt an ihrem einen Ende den Planetenträger 16 und ist an ihrem anderen Ende mit einem Kupplungsring 54 verdrehfest verbunden, welcher sich in axialer Richtung zwischen dem Kupplungsrad 50 und dem ersten Transmissionsrad 38 befindet.

Mit Bezugszeichen 60 ist ein Schaltelement bezeichnet, welches eine Schaltmuffe 62 hat, die in axialer Richtung beweglich ist und verdrehfest mit dem Kupplungsring 54 und dem Kupplungsrad 50 an seiner radialen Innenumfangsfläche und an einem mit Bezugszeichen 64 gekennzeichneten, gehäusefesten Formschlussring durch axiale Verschiebung in Eingriff bringbar ist. Das Schaltelement 60 mit der Schaltmuffe 62, der Kupplungsring 54, das Kupplungsrad 50 und der Formschlussring 64 bilden die erste Kupplung aus.

In der in Fig. 1 gezeigten Position kuppelt die Schaltmuffe 62 den Kupplungsring 54 des Planetenträgers 16 mit dem Kupplungsrad 50 des ersten Sonnenrades 12. Von dieser ersten Endstellung ist die Schaltmuffe 62 in axialer Richtung in eine zweite Endstellung verschiebbar, in welcher die Schaltmuffe 62 formschlüssig an dem äußeren Formschlussring 64 und innenseitig mit dem Kupplungsrad 50 in Eingriff ist. In einer Zwischenstellung zwischen diesen beiden Endstellungen befindet sich die Schaltmuffe 62 auf dem Außenumfang des Kupplungsrades 50 und wird von diesem mitgenommen.

Die erste Endstellung der Schaltmuffe 60 stellt einen Straßengang mit einem Übersetzungsverhältnis i =1 dar. Durch die Schaltmuffe 62 ist das erste Sonnenrad 12 mit dem Planetenträger 16 drehfest verbunden, so dass die Drehgeschwindigkeit des ersten Sonnenrades 12 und des Planetenträgers 16 mit der Drehgeschwindigkeit des von der Eingangswelle 32 angetriebenen ersten Hohlrades 14 identisch ist. Das zweite Planetengetriebeteil 20, welches ein Differentialgetriebe darstellt, wird von dem Planetenträger 16 angetrieben. Bei einer Kraftgleichheit der beiden Abtriebswellen 34, 40 drehen das zweite Sonnenrad 22 und das zweite Hohlrad 24 mit der gleichen Drehgeschwindigkeit wie der Planetenträger 16. Differenzieren sich die Drehgeschwindigkeiten der beiden Abtriebswellen 34, 40, beispielsweise aufgrund einer Kurvenfahrt des Fahrzeuges, so wird diese Differenz durch die zweiten Planetenräder 28 kompensiert.

Die zweite Endstellung der Schaltmuffe 62 stellt einen Geländegang mit einem Übersetzungsverhältnis größer als 1 dar. Das erste Sonnenrad 12 ist in diesem Geländegang mit dem Gehäuse 2 drehfest verbunden. Der Antrieb des ersten Planetengetriebeteils 10 erfolgt über das von der Eingangswelle 32 angetriebene, erste Hohlrad 14. Der Abtrieb erfolgt über den Planetenträger 16. Das Übersetzungsverhältnis des ersten Planetengetriebeteils 10 ist mit Hilfe der Formel i = 1 - Z_{S}/Z_{H} bei dem Entwurf des Verteilergetriebes festlegbar. Das zweite Planetengetriebeteil 20 funktioniert wie oben bereits in Verbindung mit der ersten Endstellung der Schaltmuffe 62 beschrieben.

Bei der Zwischenstellung der Schaltmuffe 62 wird das Verteilergetriebe in einen Neutralgang geschaltet. Das erste Sonnenrad 12 ist in diesem Gang sowohl von dem Gehäuse 2 als auch von dem Planetenträger 16 entkuppelt und dreht aufgrund der zwischengelagerten ersten Planetenräder 18 in der entgegen gesetzten Richtung des ersten Hohlrades 14. Der Planetenträger 16, welcher das zweite Planetengetriebeteil 20 antreibt, steht aufgrund der nachgeschalteten Last still. Somit wird das zweite Plantetengetriebeteil und die in der Kraftflussrichtung nachgeschalteten Abtriebswellen 34, 40 von der Eingangswelle 32 entkuppelt.

Das vereinfachte Getriebeschema nach Fig. 2 zeigt das zweite Ausführungsbeispiel gemäß der vorliegenden Erfindung. Nachfolgend werden lediglich die Unterschiede zwischen diesem Ausführungsbeispiel und dem ersten Ausführungsbeispiel erläutert.

Zwischen dem eingangseitigen Flansch 30 und dem Kupplungsrad 50 des ersten Sonnenrades 12 ist ein Kupplungsring 66 vorgesehen, welcher mit der Eingangswelle 32 drehfest verbunden ist. Der Formschlussring 64 ist dem Kupplungsrad 50 des ersten Sonnenrades 12 und dem Kupplungsring 66 in axialer Richtung nachgelagert. In einer ersten Endstellung der Schaltmuffe 62, wie in Figur 2 oberhalb der Eingangswelle 32 dargestellt, wird die Eingangswelle 32 mit dem ersten Sonnenrad 12 drehfest verbunden. In einer zweiten Endstellung der Schaltmuffe 62 (siehe Figur 2, unterhalb der Eingangswelle 32), ist das erste Sonnenrad 12 mit dem Gehäuse 2 drehfest verbunden. In einer Zwischenstellung zwischen den beiden Endstellungen der Schaltmuffe 62 wird das erste Sonnenrad 12 weder mit dem Gehäuse 2 noch mit der Eingangswelle 32 gekuppelt.

Ferner weist der Planetenträger 16 an dem eingangsseitigen axialen Ende einen Kupplungsflansch 68 auf, neben welchem ein Kupplungsflansch 70 der zweiten Abtriebswelle 40 angeordnet ist. Der Kupplungsflansch 70 der zweiten Abtriebswelle 40 ist drehfest mit der zweiten Abtriebswelle 40 verbunden. Durch das Ein- bzw. Ausrücken der beiden Kupplungsflansche 68, 70 können die zweite Abtriebswelle 40 und der Planetenträger 16 gekuppelt bzw. entkuppelt werden.

In der ersten Endstellung der Schaltmuffe 62 wird das über dem eingangsseitigen Flansch 30 auf die Eingangswelle 32 übertragene Drehmoment durch das Schaltelement 60 auf das erste Hohlrad 14 und das erste Sonnenrad 12 verteilt. Das erste Sonnenrad 12, das erste Hohlrad 14 und zwangsläufig der Planetenträger 16 drehen mit der gleichen Drehgeschwindigkeit. Somit wird ein Straßengang mit einem Übersetzungsverhältnis i = 1 ermöglicht. Des Weiteren drehen das erste Sonnenrad 12, das erste Hohlrad 14 und die ersten Planetenräder 18 nicht relativ zueinander. Es ergibt sich eine deutliche Reduzierung der Reibung und des Verschleißes des ersten Planetengetriebeteils 10 in dem Straßengang.

Das zweite Planetengetriebeteil 20 wird dabei durch den Planetenträger 16 angetrieben, welcher durch die Kupplungsgsflansche 68, 70 mit der zweiten Abtriebswelle 40 kuppelbar ist. In einem gekuppelten Zustand können die zweiten Planetenräder 28 nicht relativ zu dem zweiten Sonnenrad 22 drehen, so dass etwaige Unterschiede in der Drehgeschwindigkeit zwischen den beiden Abtriebswellen 34, 40 nicht mehr durch die zweiten Planetenräder 28 kompensiert werden. Eine Differenzialsperre mit 100 % Sperrwirkung wird dadurch ermöglicht.

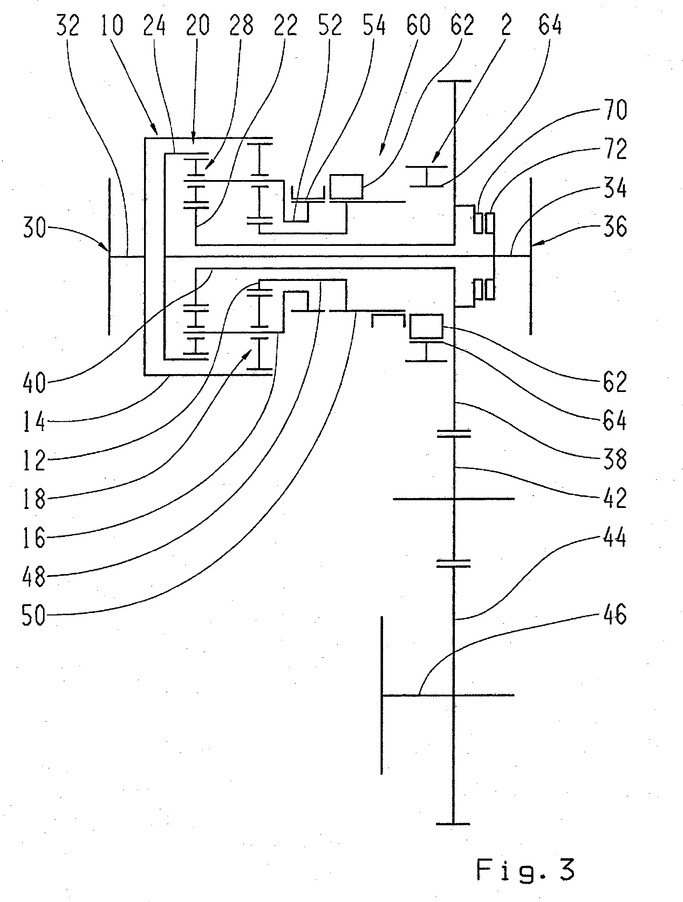

Das vereinfachte Getriebeschema nach Fig. 3 zeigt ein drittes Ausführungsbeispiel gemäß der vorliegenden Erfindung. Bei diesem Ausführungsbeispiel ist das zweite Planetengetriebeteil 20 in dem ersten Hohlrad 14 aufgenommen. Das erste und das zweite Hohlrad 14, 24 sind nach der Ausgangsseite geöffnet. Die Eingangswelle 32 ist an der Rückseite des ersten Hohlrades 14 mit diesem verbunden. Die erste Kupplung, umfassend das Schaltelement 60, den Formschlussring 64, das Kupplungsrad 50 des ersten Sonnenrades 12 und den Kupplungsring 54 des Planetenträgers 16, ist im Wesentlichen identisch mit der ersten Kupplung gemäß dem ersten Ausführungsbeispiel und jedoch zwischen den beiden Planetengetriebeteilen 10, 20 und dem ersten Transmissionsrad 38 angeordnet. Der Kupplungsflansch 70 der zweiten Antriebswelle 40 ist an der Außenseite des ersten Transmissionsrades 38 befestigt und neben einem Kupplungsflansch 72 der ersten Abtriebswelle 34 angeordnet.

Die Darstellung eines Geländegangs, eines Straßengangs und eines Neutralgangs bei dem dritten Ausführungsbeispiel entspricht dem des ersten Ausführungsbeispiels. Durch die zweite Kupplung umfassend den Kupplungsflansch 70 der zweiten Abtriebswelle 40 und dem Kupplungsflansch 72 der ersten Abtriebswelle 34 wird eine Differenzialsperre ermöglicht, welche die Ausgleichkraft zwischen den beiden Abtriebswellen 34, 40 ausgangsseitig abfangen kann, so dass das zweite Planetengetriebeteil 20 nicht von der Ausgleichkraft beansprucht wird.

### Bezugszeichen

- 2: Gehäuse
- 10: erstes Planetengetriebeteil
- 12: erstes Sonnenrad
- 14: erstes Hohlrad
- 16: Planetenträger
- 18: erste Planetenräder
- 20: zweites Planetengetriebe
- 22: zweites Sonnenrad
- 24: zweites Hohlrad
- 28: zweite Planetenräder
- 30: eingangsseitiger Flansch
- 32: Eingangswelle
- 34: erste Abtriebswelle
- 36: ausgangsseitiger Flansch
- 38: erstes Transmissionsrad
- 40: zweite Abtriebswelle
- 42: Zwischenrad
- 44: zweites Transmissionsrad
- 46: versetzte Abtriebswelle
- 48: Hohlwelle des ersten Sonnenrades
- 50: Kupplungsrad des ersten Sonnenrads
- 52: Hohlwelle des Planetenträgers
- 54: Kupplungsring des Planetenträgers
- 60: Schaltelement
- 62: Schaltmuffe
- 64: Formschlussring
- 66: Kupplungsring der Eingangswelle
- 68: Kupplungsflansch des Planetenträgers
- 70: Kupplungsflansch der zweiten Abtriebswelle
- 72: Kupplungsflansch der ersten Abtriebswelle

## Patentansprüche

1. Verteilergetriebe für ein mit mehr als zwei angetriebenen Antriebsräder ausgebildetes Kraftfahrzeug mit einem Gehäuse (2), einer Eingangswelle (32), einem mit dieser trieblich verbundenen, ersten Planetengetriebeteil (10), welcher ein erstes Sonnenrad (12), ein erstes Hohlrad (14), einen Planetenträger (16) und ein erstes Planetenrad (18) aufweist, wobei das erste Planetenrad (18) auf dem Planetenträger (16) gelagert ist, einer ersten Abtriebswelle (34) und einer zweiten Abtriebswelle (40), wobei die Eingangswelle (32) koaxial zur ersten Abtriebswelle (34) angeordnet ist, wobei das erste Hohlrad (14) drehbar in dem Gehäuse (2) gelagert und von der Eingangswelle (32) antreibbar ist und das erste Sonnenrad (12) durch eine erste Kupplung (60) mit dem Gehäuse (2) drehfest kuppelbar ist **gekennzeichnet durch** ein zweites Planetengetriebeteil (20), welches ein zweites Hohlrad (24), ein zweites Sonnenrad (22) und ein zweites Planetenrad (28) aufweist, wobei das zweite Planetenrad (28) auf dem Planetenträger (16) gelagert ist, wobei die erste Abtriebswelle (34) von dem zweiten Hohlrad (24) antreibbar ist.

2. Verteilergetriebe nach Anspruch 1, **dadurch gekennzeichnet, dass** das erste Sonnenrad (12) durch die erste Kupplung (60) mit dem Planetenträger (16) drehfest kuppelbar ist.

3. Verteilergetriebe nach Anspruch 2, **dadurch gekennzeichnet, dass** die erste Kupplung (60) zur Darstellung eines Neutralgangs ausgebildet ist, in dem das erste Sonnenrad (12) durch die erste Kupplung (60) von dem Gehäuse (2) und dem Planetenträger (16) entkuppelt ist.

4. Verteilergetriebe nach Anspruch 1, **dadurch gekennzeichnet, dass** das erste Sonnenrad (12) durch die erste Kupplung (60) mit dem ersten Hohlrad (14) drehfest kuppelbar ist.

5. Verteilergetriebe nach Anspruch 4, **dadurch gekennzeichnet, dass** die erste Kupplung (60) zur Darstellung eines Neutralgangs ausgebildet ist, in dem das erste Sonnenrad (12) durch die erste Kupplung (60) von dem Gehäuse (2) und dem ersten Hohlrad (14) entkuppelt ist.

6. Verteilergetriebe nach einem der vorherigen Ansprüche, **dadurch gekennzeichnet, dass** das zweite Planetengetriebetei (20), konzentrisch zu dem ersten Planetengetriebeteil (10) ausgebildet ist, wobei die zweite Abtriebswelle (40) von dem zweiten Sonnenrad (22) antreibbar ist.

7. Verteilergetriebe nach Anspruch 6, **dadurch gekennzeichnet, dass** das erste Planetengetriebeteil (10) in dem zweiten Hohlrad (24) aufgenommen ist.

8. Verteilergetriebe nach Anspruch 6 oder 7, **dadurch gekennzeichnet, dass** das zweite Sonnenrad (22) durch eine zweite Kupplung (68, 70) mit dem Planetenträger (16) kuppelbar ist.

9. Verteilergetriebe nach Anspruch 6 oder 7, **dadurch gekennzeichnet, dass** das zweite Sonnenrad (22) durch eine zweite Kupplung (70, 72) mit dem zweiten Hohlrad (24) kuppelbar ist.

10. Verteilergetriebe nach Anspruch 9, **dadurch gekennzeichnet, dass** das zweite Planetengetriebeteil (20) in dem ersten Hohlrad (14) aufgenommen ist.

## Claims

1. Transfer gearbox for a motor vehicle which is configured with more than two driven drive wheels, having a housing (2), an input shaft (32), a first planetary gear mechanism part (10) which is connected in drive terms to the said input shaft (32) and has a first sun gear (12), a first internal gear (14), a planetary carrier (16) and a first planetary gear (18), the first planetary gear (18) being mounted on the planetary carrier (16), a first output shaft (34) and a second output shaft (40), the input shaft (32) being arranged coaxially with respect to the first output shaft (34), the first internal gear (14) being mounted rotatably in the housing (2) and it being possible for the said first internal gear (14) to be driven by the input shaft (32), and it being possible for the first sun gear (12) to be coupled fixedly to the housing (2) so as to rotate with it by way of a first coupling (60), **characterized by** a second planetary gear mechanism part (20) which has a second internal gear (24), a second sun gear (22) and a second planetary gear (28), the second planetary gear (28) being mounted on the planetary carrier (16), it being possible for the first output shaft (34) to be driven by the second internal gear (24).

2. Transfer gearbox according to Claim 1, **characterized in that** the first sun gear (12) can be coupled fixedly to the planetary carrier (16) so as to rotate with it by way of the first coupling (60).

3. Transfer gearbox according to Claim 2, **characterized in that** the first coupling (60) is configured for producing a neutral gear, in which the first sun gear (12) is decoupled from the housing (2) and the planetary carrier (16) by way of the first coupling (60).

4. Transfer gearbox according to Claim 1, **characterized in that** the first sun gear (12) can be coupled fixedly to the first internal gear (14) so as to rotate with it by way of the first coupling (60).

5. Transfer gearbox according to Claim 4, **characterized in that** the first coupling (60) is configured for producing a neutral gear, in which the first sun gear (12) is decoupled from the housing (2) and the first internal gear (14) by way of the first coupling (60).

6. Transfer gearbox according to one of the preceding claims, **characterized in that** the second planetary gear mechanism part (20) is configured concentrically with respect to the first planetary gear mechanism part (10), it being possible for the second output shaft (40) to be driven by the second sun gear (22).

7. Transfer gearbox according to Claim 6, **characterized in that** the first planetary gear mechanism part (10) is received in the second internal gear (24).

8. Transfer gearbox according to Claim 6 or 7, **characterized in that** the second sun gear (22) can be coupled to the planetary carrier (16) by way of a second coupling (68, 70).

9. Transfer gearbox according to Claim 6 or 7, **characterized in that** the second sun gear (22) can be coupled to the second internal gear (24) by way of a second coupling (70, 72).

10. Transfer gearbox according to Claim 9, **characterized in that** the second planetary gear mechanism part (20) is received in the first internal gear (14).

## Revendications

1. Boîte de transfert pour un véhicule automobile réalisé avec plus de deux roues motrices entraînées, comprenant un carter (2), un arbre d'entrée (32), une première partie d'engrenage planétaire (10) connectée par entraînement avec celui-ci, laquelle présente une première roue solaire (12), une première couronne dentée (14), un porte-satellites (16) et un premier satellite (18), le premier satellite (18) étant monté sur le porte-satellites (16), un premier arbre de sortie (34) et un deuxième arbre de sortie (40), l'arbre d'entrée (32) étant disposé coaxialement au premier arbre de sortie (34), la première couronne dentée (14) étant montée à rotation dans le carter (2) et pouvant être entraînée par l'arbre d'entrée (32) et la première roue solaire (12) pouvant être accouplée de manière solidaire en rotation au carter (2) par un premier embrayage (60), **caractérisée par** une deuxième partie d'engrenage planétaire (20) qui présente une deuxième couronne dentée (24), une deuxième roue solaire (22) et un deuxième satellite (28), le deuxième satellite (28) étant monté sur le porte-satellites (16), le premier arbre de sortie (34) pouvant être entraîné par la deuxième couronne dentée (24).

2. Boîte de transfert selon la revendication 1, **caractérisée en ce que** la première roue solaire (12) peut être accouplée de manière solidaire en rotation au porte-satellites (16) par le premier embrayage (60).

3. Boîte de transfert selon la revendication 2, **caractérisée en ce que** le premier embrayage (60) est réalisé de manière à constituer un rapport neutre, dans lequel la première roue solaire (12) est désaccouplée du carter (2) et du porte-satellites (16) par le premier embrayage (60).

4. Boîte de transfert selon la revendication 1, **caractérisée en ce que** la première roue solaire (12) peut être accouplée de manière solidaire en rotation à la première couronne dentée (14) par le premier embrayage (60).

5. Boîte de transfert selon la revendication 4, **caractérisée en ce que** le premier embrayage (60) est réalisé de manière à constituer un rapport neutre, dans lequel la première roue solaire (12) est désaccouplée du carter (2) et de la première couronne dentée (14) par le premier embrayage (60).

6. Boîte de transfert selon l'une quelconque des revendications précédentes, **caractérisée en ce que** la deuxième partie d'engrenage planétaire (20) est réalisée de manière concentrique à la première partie d'engrenage planétaire (10), le deuxième arbre de sortie (40) pouvant être entraîné par la deuxième roue solaire (22).

7. Boîte de transfert selon la revendication 6, **caractérisée en ce que** la première partie d'engrenage planétaire (10) est reçue dans la deuxième couronne dentée (24).

8. Boîte de transfert selon la revendication 6 ou 7, **caractérisée en ce que** la deuxième roue solaire (22) peut être accouplée au porte-satellites (16) par un deuxième embrayage (68, 70).

9. Boîte de transfert selon la revendication 6 ou 7, **caractérisée en ce que** la deuxième roue solaire (22) peut être accouplée à la deuxième couronne dentée (24) par un deuxième embrayage (70, 72).

10. Boîte de transfert selon la revendication 9, **caractérisée en ce que** la deuxième partie d'engrenage planétaire (20) est reçue dans la première couronne dentée (14).
